# EUROPEAN PATENT SPECIFICATION

(11) **EP 2 932 828 B1**
(45) Date of publication and mention of the grant of the patent: **19.04.2017**
(21) Application number: 13861813.7
(22) Date of filing: 15.01.2013
(51) Int. Cl.: A01K 1/03, A01K 31/06, A01K 1/02

(54) **FOLDABLE AND EXPANDABLE PORTABLE PET CRATE**
FALTBARE UND AUSBREITBARE TRAGBARE HAUSTIERKISTE
CAISSE PORTABLE PLIABLE ET EXTENSIBLE POUR ANIMAUX DOMESTIQUES

(30) Priority: 11.12.2012 CN 201210530429
(43) Date of publication of application: 21.10.2015
(73) Proprietor: Xiamen Sunnypet Products Co., Ltd., Huli District Xiamen City 361000 (CN)
(72) Inventor: LU, Kongzhi, Xiamen Fujian 361006 (CN)
(74) Representative: Wächter, Jochen
(86) International application number: PCT/CN2013/070446
(87) International publication number: WO 2014/089923

(56) References cited:
- CN-U- 201 905 115
- CN-Y- 2 753 137
- CN-Y- 2 862 674
- CN-Y- 201 238 524
- US-A1- 2005 132 972
- US-A1- 2010 126 427

## Description

### FIELD AND BACKGROUND OF THE INVENTION

Collapsible and portable pet carriers or crates have been around for some time. When larger amount of space is needed inside the pet crate to give pets roomier place for resting and more comfortable posture, the use of rigid frame or rods to form the supporting structure is unavoidable, which results in less flexibility in the collapsible folding feature.

Other traditional pet crates or pet houses are made with heavier materials for increased strength. However, the down side becomes pretty obvious when the weight of the materials reduces the portability of the pet houses.

Also, there are some zipper-based collapsible pet houses or pet crates on the market. See e.g. document CN-2862674Y. However, the use of the zippers in the current art products are the typical two zipper strips with teeth facing each other: one is facing inward and one is facing outward. It is observed that the corners of such zipped up pet houses tend to cave in easily, as there is not enough tension being maintained by such traditional zipping mechanism.

### SUMMARY OF THE INVENTION

The invention relates to the construction of a pet house that can be easily set up, and to provide good structural strength without adding too much weight. The invention further provides an easy fold-down pet house that will become a flat piece when collapsed.

The invention further disclosed a 180-degree turn zipper strip that creates stronger corner propping power that avoids the cave-in problems associated with many old-art zipper type pet housing or crates.

The use of ballast chambers also provides an easy way to increase the stability of the assembled and fully erected pet house when used in open or windy area, or when animal frolicking or horse play could pose an issue of knocking down the pet house.

### The present invention adopts the following technical scheme :

A collapsible portable pet houses , the pet houses is extensible cloth pet houses , the pet house includes roof deck , quadrilateral base and respectively connected to the base of a quadrilateral of quadrilateral front sidewall, a back sidewall and a quadrilateral or pentagonal of left and right side walls; The roof panel integrally connecting said front side wall disposed edge , said left and right side walls each equipped with a quadrilateral support frame; The front sidewall , roof panel and rear side walls each connected by a first zipper pet houses of the left and right side walls form a closed, i.e. , left and right sides of the front side wall the first zipper respectively connecting the left and right side walls, the front edge of the roof panel by left and right side edges of first zipper respectively connecting the left and right side walls, the upper edge of the rear side wall of left and right through the first zipper respectively connecting the left and right side walls along the rear side of; The first zipper comprise mating attachment A cloth tape and B leader, the A cloth tape respectively fixedly sewn to the left and right side walls is , at an edge of the B strip correspondingly respectively fixedly sewn to the front side wall, a roof panel and a rear side wall, and on side B of strip by the anterior wall after 180 degree twist fitted to the roofing panel bottom side edge , that is the left and right sides front and rear side walls B of the fitting belt teeth of outwardly oriented , the roof panel left and right side B of the fitting belt teeth of inwardly oriented set, and A belt teeth when stitching is inwardly oriented.

### Further improvement :

The front sidewall has a pet access doors , the pet access door equipped with a door curtain; The left and / or right sidewall equipped with the lens the gas window , breathable window the provided with screen.

The bottom edges of the left and right side walls respectively provided for mounting sand or water bag pocket, the pocket along the base edge of the laterally disposed.

Tape B of the first zipper may be a two - segment: rear side wall and the bottom plate integrally connected set, the B strip includes rear and front top section , said rear section mounted on the rear side wall, the front top section mounted on the front side wall and the roof deck , the rear and front top section respectively is provided with a slider.B fabric may also be a one - segment: the rear side wall and the roof panel integrally connected set, B belt from a roof bottom as a 180 degree twist back mounted to the rear side wall; The rear sidewall has disassembled following the said rear sidewall folding down to level a second zipper, a second zipper in a U - shaped arrangement.

The base plate is provided with a crotch , to increase comfort, the pet - the crotch area to the rear sidewall and the floor area and is otherwise compatible.

The following manner: a roofing panel disposed preferably , roof panel , the roof panel area greater than the base area has eaves fit around to pet shingle roof portion , the roof panel is waterproof; The way , the roof panel equipped with an area greater than the floor area around the shielding , the shielding has eaves fit on top of the roofing panel , the shutter is waterproof shielding.

The front and / or the left and / or right side walls is provided with a pocket, the pocket is provided with a flap.

From the above structures of the present invention will be apparent from the description , compared with the prior art , the present invention has the following advantages : the pet houses in left and right sides respectively by one or two stages zipper connecting faces roof the plate form pet houses , simple structure , assembly of pet houses and unstacking is convenient, when the zipper pull, of the both sides of the entire pet houses each face can be fully deployed , completely spread into a plane , facilitate folding of the crimp , pet houses footprint small, portable and placed; When rear wall the paving after deployment, rear side wall, rear side wall after deployment, may be used when the pad under roofing product to semi - open , pet has shade or flashing functions , may also be expanded the rear side wall as empty , as in outdoor rest motion , sufficient vision and breathing fresh air, alternatively in daily use using wood or metal fixed built pet kennel , pet kennel more portable , convenient mobile; Meanwhile , such semi - open pet houses , pet access from , pet does not occur because the pet access door is small and pet bruises , knocked over or the loss pet houses , etc. , finally , and pet houses B for strapping of the invention towards disposed such that the left and right side walls side zipper pulling backward convex ends , may the roof sheets pushed sideways against the the roofing shingle , thereby maintaining flatness

### DESCRIPTION OF THE DRAWINGS

The accompanying drawings, which are incorporated in and constitute a part of this specification, illustrate the preferred embodiments of the invention and together with the description, serve to explain the principles of the invention.

A brief description of the drawings is as follows:
Fig. 1 shows the completely assembled view of the pet crate of the present invention, with the front side wall and left side wall facing the viewers.
Fig. 2 shows the completely assembled view the pet crate of the present invention, with the back side wall and the right side wall facing the viewers.
Fig. 3 shows the pet crate of the present invention, when collapsed down and folded flat.
Fig. 4 shows the pet crate of the present invention, when collapsed and unfolded flat, in an expanded fashion.
Fig. 5 is a partial exploded view of the top corner area under the roof, as depicted in Fig. 1, marked by an X.
Fig. 6 shows the 180 degree flip of the zipper strip 17b.

### DETAILED DESCRIPTION OF THE PREFERRED EMBODIMENT

As shown in the figures, the foldable and collapsible pet crate 1 of present invention has a roof plate 11, a generally rectangular base plate 12 and four side wall pieces.

The 4 side walls are front side wall 13, back side wall 14, left side wall 15, and right side wall 16. The front side wall piece13 and back side wall piece 14 are generally rectangular.

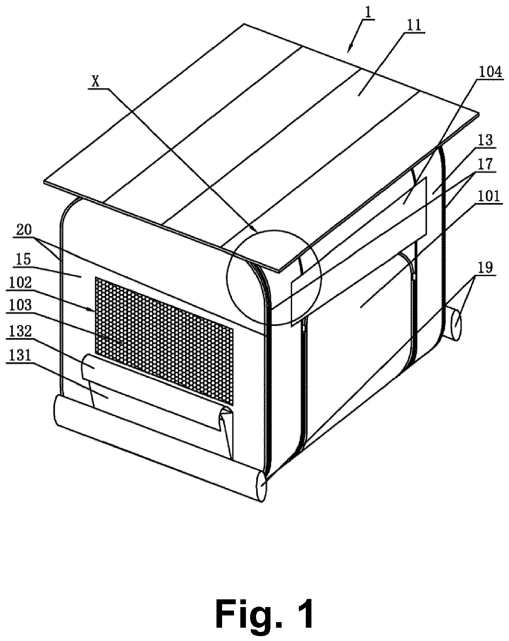

The orientation of front, back, left and right will be from the perspective of looking at front side wall 13 squarely, so that left side wall 15 is to the left side, as shown in Fig. 1, and 15 right side wall 16 is to the right side, which is invisible in Fig.1.

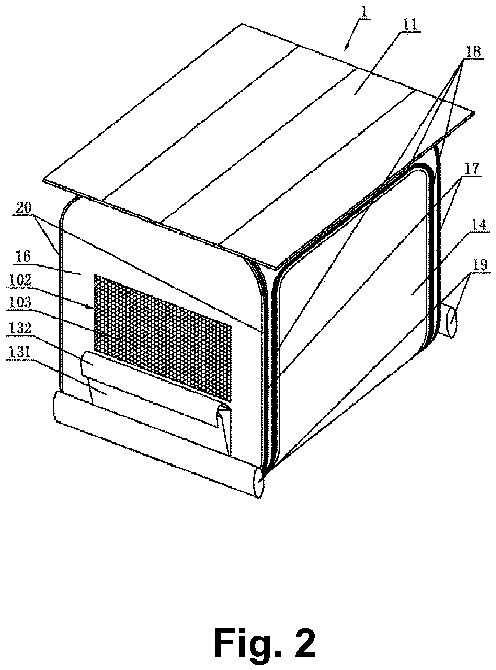

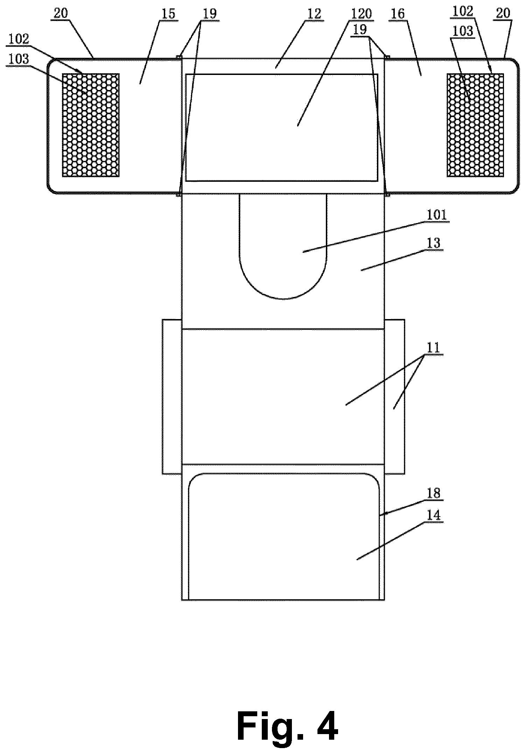

The side walls 13, 15 and 16 are directly connected to the base plate 12, with the back side wall 14 connected to the roof plate 11 when collapsed and flattened, as shown in Fig. 4. The back side wall 14 will be connected to the base plate 12 when the pet crate is assembled and erected for use, as shown in Figs. 1 and 2.

Although the preferred embodiment showed these side walls pieces to be in generally rectangular shape, they are not limited to that shape. For example, the right side wall 16 and left side wall 15 can be 5-sided, as long as they fit to a matching shape of the roof plate 11 which would have a bent angle in the middle, and allow the crate to be fully zipped up and erected for use.

A support frame 20 is built to the edge of left side wall 15 and right side wall 16. Two first zippers 17 will connect the front side wall 13, roof plate 11 and back side wall 14 together with the left side wall 15 and the right side wall 16, to form an assembled and fully erected pet crate 1.

The left side wall 15 and right side wall 16 each has a first zipper 17. The function and description for the two zippers 17 will be the same. First zipper 17 is made up of two strips for zipping together. Strip 17a is made to the edge of left side wall 15, and similarly, to the edge of right side wall 16.

Looking at Fig. 4, Strip 17b is made to the left (connected) edges of the front side wall 13, roof plate 11 and back side wall 14. Similarly, another corresponding strip 17b is made to the right (connected) edges of the front side wall 13, roof plate 11 and back side wall 14.

When affixing a strip 17a to the edge of left side wall 15, the zipper teeth is oriented to face inwardly.

When affixing a strip 17a to the edge of right side wall 16, the zipper teeth is oriented to face inwardly.

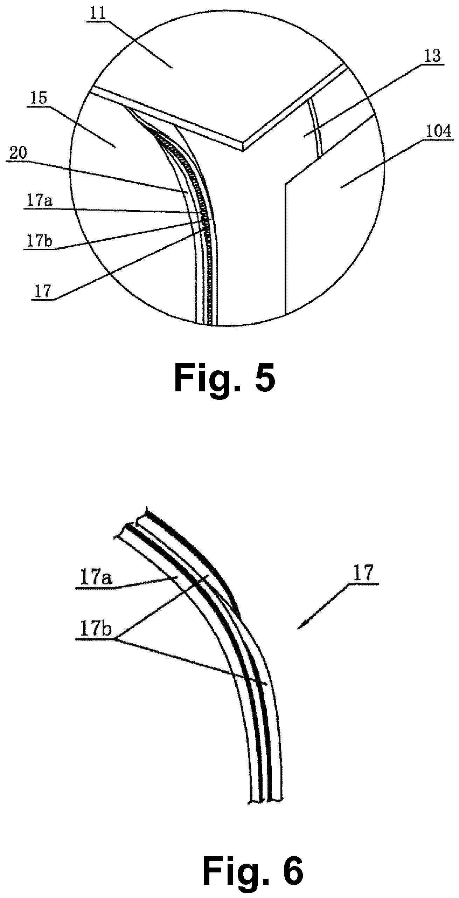

The strip 17b is fixed to the connected edges (looking at Fig. 4) of the front side wall 13, the roof plate 11 and the back side wall 14 in a special way. The zipper teeth of strip 17b is oriented outwardly along the edges of the front side wall 13 and back side wall 14, but is turned 180 degrees to be oriented inwardly along the edges of the roof plate 11. This special 180-degree flip of the zipper teeth orientation is shown in Figs. 5 - 6.

This 180-degree flip feature of the strip 17b increases the strength at the top four corners just under the roof plate 11 when the crate 1 is fully assembled, and helps to reduce the tendency of roof plate 11 caving in that happens more with the traditional zipper mechanism, especially at the four corners on top that supports the roof plate 11.

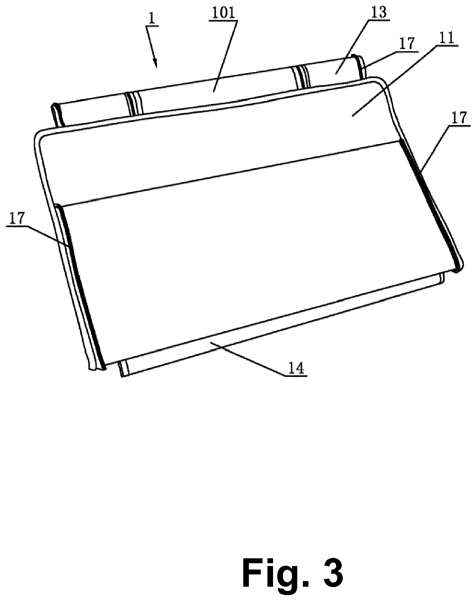

To collapse and fold down the pet crate 1 of present invention is relatively easy as well. When the two first zippers 17 were fully unzipped on both left and right sides along the full length of the edges of left side wall 15 and right side wall 16, the crate 1 can be collapsed down and spread out to be in a flat configuration, and then be folded into a shape that takes up very small area, as shown in Fig. 3 and Fig. 4.

A second zipper 18 is made to the back side wall 14. An inversed U-shape zipping line is formed for the zipper 18, so that back side wall 14 can be zipped opened down to be lying flat on a surface, resulting in a big opening as defined by the line of the zipper 18.

The opening made from the zipper 18 opening is bigger than the opening of the door 101. This mode of opening back side wall 14, via separate zipper 18, produces a semi-open 15 pet house or pet crate that is especially suitable for pets with larger bodies, or when easy access to outdoor space is desired.

A door 101 is made on front side wall 13. No particular mechanism is needed to be disclosed here for providing the opening mechanism as this is well known in the art. A zipper can be used, so is a Velcro® strip. Additionally, a curtain 104 is made just above the door 101, providing some shade and heat-deflection.

A window 102 is provided on the left side wall 15; a mesh material 103 is optionally used on the window 102. Though the specification herein, as well as Fig. 1, shows the window 102 to be on the left side wall 15, it is understood that a person reasonably skilled in the art needs no further disclosure to make the window/mesh (102/103) on the right side wall 16.

Two ballast chambers 19 are made to the bottom portion of left side wall 15 and right side wall 16. The ballast chambers 19 can be filled with water, sand or other suitable weighting materials, to weigh down the pet crate 1, when placed in an outdoor and potentially windy setting. Such ballast chambers 19 also prevent easy knocking over by the horse play or frolicking of animals or pets nearby.

A padding 120 is provided to the base plate 12, to increase the comfort level of the pets when sitting or resting on top of base plate 12. Said padding 120 can have a two-layer fold-up design, so that when it's folded up, the two layers take up roughly the same area as the base plate 12. When it's unfolded, the single-layer area would cover roughly the area of the base plate 12 and back side wall 14, suitable for when the back side wall 14 is zipped down flat, forming a semi-open pet crate or pet house 1.

Roof plate 11 serves the purpose of providing a shelter from the sun or the rain. Two specific implementations are discussed herein.

The first roof plate 11 implementation is a generally rigid plate with good waterproofing and UV-resistance attributes.

The second roof plate 11 implementation contains an additional shelter plate attached to the top of the rigid plate, said additional shelter plate has an area that's larger than the area of the rigid plate. This additional shelter plate implementation can be seen in Fig. 4, though only a single element number 11 is used to denote the rigid plate, as well as the shelter plate.

The attachment of the additional shelter plate to the rigid plate can be by Velco®, glue, or other suitable mechanism.

A pocket 131 can be added to left side wall 15 or right side wall 16, to increase the convenience for the access and storage of pet snacks, medication, etc. A pocket cover 132 sits slightly on top of said side pocket 131, to cover up the opening and preventing things or objects from falling out. The pocket 131 and pocket cover can also be made to the front side wall 13, if so desired.

As a design option, the left side wall and right side wall can be made into corresponding pentagon shape, and the roof plate will be made into a bent shape to match the pentagon shape of the two side walls 13 and 14.

## Claims

1. A collapsible and portable pet crate (1),
wherein said pet crate (1) is a cloth pet crate,
wherein said pet crate (1) comprises a crate top plate (11), a quadrilateral base plate (12) and respectively connected to the base plate (12) of quadrilateral front side wall (13), back side walls (14), left side walls (15) and right side walls (16),
wherein said crate top plate (11) is connected to the front side wall (13), edges of the left side wall (15) and the right side wall (16) are respectively equipped with quadrilateral support frames (20), and
wherein said front side wall (13), the crate top plate (11) and the back side wall (14) are all connected to the left side wall (15) and the right side wall (16) via a first zip fastener (17) to form a closed pet crate,
**characterized in that**
the first zip fastener (17) comprises a cloth tape A and a cloth tape B meshing with each other, the cloth tape B being sewn to a side edge of the front side wall (13), the crate top plate (11) and the back side wall (14) and after turning 180 degrees from the front side wall (13), the cloth tape B fits with the bottom part of the crate top plate (11).

2. The pet crate (1) of claim 1, wherein the front side wall (13) further has a door (101), with an optional curtain (104) on top of the door (101).

3. The pet crate (1) of claim 1, wherein either one of the left side wall (15) and right side wall (16) further has a window (102).

4. The pet crate (1) of claim 1, wherein two ballast chambers (19) are made to the bottom portion of left side wall (15) and right side wall (16).

5. The pet crate (1) of claim 1, wherein the back side walls (14) connected to the top plate (11), the cloth tape B assembled to the back side wall (14) after turning 180 degrees from the crate top plate (11).

6. The pet crate (1) of claim 1, wherein the back side wall (14) contains a second zipper (18) that allows an inversed U-shaped opening to be made and opened down to be lying flat on a surface.

7. The pet crate (1) of claim 1, wherein the base plate (12) further containing a padding (120) that can be folded into a two-layer design or unfolded into a single-layer design for more extending out use.

8. The pet crate (1) of claim 1, wherein the top plate (11) contains an additional shelter plate attached to the top of a rigid plate, said additional shelter plate has an area that's larger than the area of the rigid plate, and the roof plate is a generally rigid plate with waterproof.

9. The pet crate (1) of claim 1, wherein a pocket (131) with optional pocket cover (132) can be added to the front side wall (13), left side wall (15), or the right side wall (16).

10. The pet crate (1) of claim 1, wherein the left side wall (15) and right side wall (16) can be made into corresponding pentagon shape, and the top plate will be made into a bent shape to match the pentagon shape of the two side walls (15, 16).

## Patentansprüche

1. Zusammenlegbare und tragbare Haustierkiste (1),
wobei die Haustierkiste (1) eine Haustierkiste aus Stoff ist,
wobei die Haustierkiste (1) eine obere Kistenplatte (11), eine viereckige Basisplatte (12) und jeweils eine mit der Basisplatte (12) verbundene viereckige vordere Seitenwand (13), hintere Seitenwand (14), linke Seitenwand (15) und rechte Seitenwand (16) aufweist,
wobei die obere Kistenplatte (11) mit der vorderen Seitenwand (13) verbunden ist, wobei Ränder der linken Seitenwand (15) und der rechten Seitenwand (16) jeweils mit viereckigen Stützrahmen (20) versehen sind, und
wobei die vordere Seitenwand (13), die obere Kistenplatte (11) und die hintere Seitenwand (14) alle mit der linken Seitenwand (15) und der rechten Seitenwand (16) durch einen ersten Reißverschluss (17) verbunden sind, um eine geschlossene Haustierkiste zu bilden,
**dadurch gekennzeichnet, dass**
der erste Reißverschluss (17) ein Stoffband A und ein Stoffband B aufweist, die miteinander in Eingriff stehen, wobei das Stoffband B an einem seitlichen Randabschnitt der vorderen Seitenwand (13), der oberen Kistenplatte (11) und der hinteren Seitenwand (14) angenäht ist, und wobei nach einer Drehung um 180 Grad von der vorderen Seitenwand (13) aus, das Stoffband B an der Unterseite der oberen Kistenplatte (11) anliegt.

2. Haustierkiste (1) nach Anspruch 1, wobei die vordere Seitenwand (13) weiterhin eine Türe (101) mit einem optionalen Vorhang (104) an der Oberseite der Türe (101) aufweist.

3. Haustierkiste (1) nach Anspruch 1, wobei die linke Seitenwand (15) oder die rechte Seitenwand (16) weiterhin ein Fenster (102) aufweist.

4. Haustierkiste (1) nach Anspruch 1, wobei zwei Ballastkammern (19) an dem unteren Abschnitt der linken Seitenwand (15) und der rechten Seitenwand (16) gebildet sind.

5. Haustierkiste (1) nach Anspruch 1, wobei die hintere Seitenwand (14) mit der oberen Platte (11) verbunden ist und das Stoffband B nach einer 180 Grad Drehung von der oberen Kistenplatte (11) aus an der hinteren Seitenwand (14) angeordnet ist.

6. Haustierkiste (1) nach Anspruch 1, wobei die hintere Seitenwand (14) einen zweiten Reißverschluss (18) aufweist, sodass ein umgekehrt U-förmiger Öffnungsabschnitt gebildet wird, der so nach unten geklappt werden kann, dass er flach an einer Oberfläche aufliegt.

7. Haustierkiste (1) nach Anspruch 1, wobei die Basisplatte (12) weiterhin ein Polster (120) aufweist, das in eine zweilagige Anordnung gefaltet werden kann oder in eine einlagige Anordnung aufgeklappt werden kann, um eine erweiterte Verwendungsmöglichkeit zu schaffen.

8. Haustierkiste (1) nach Anspruch 1, wobei die obere Kistenplatte (11) eine zusätzliche Dachplatte aufweist, die an der Oberseite einer starren Platte befestigt ist, wobei die zusätzliche Dachplatte eine Fläche hat, die größer als die Fläche der starren Platte ist, und wobei die Dachplatte eine im Wesentlichen starre und wasserdichte Platte ist.

9. Haustierkiste (1) nach Anspruch 1, wobei eine Tasche (131) mit einer optionalen Taschenabdeckung (132) an der vorderen Seitenwand (13), der linken Seitenwand (15) oder der rechten Seitenwand (16) hinzugefügt werden kann.

10. Haustierkiste (1) nach Anspruch 1, wobei die linke Seitenwand (15) und die rechte Seitenwand (16) in einer entsprechenden pentagonalen Form herstellbar ist, und die obere Platte bogenförmig gebildet ist, sodass sie zur pentagonalen Form der beiden Seitenwände (15, 16) passt.

## Revendications

1. Caisse pliable et transportable pour animal domestique (1),
dans laquelle ladite caisse pour animal domestique (1) est une caisse en tissu pour animal domestique,
dans laquelle ladite caisse pour animal domestique (1) comprend une plaque supérieure de caisse (11), une plaque de base quadrilatérale (12) et respectivement reliée à la plaque de base (12) d'une paroi latérale avant quadrilatérale (13), de parois latérales arrière (14), de parois latérales gauches (15) et de parois latérales droites (16),
dans laquelle ladite plaque supérieure de caisse (11) est reliée à la paroi latérale avant (13), des bords de la paroi latérale gauche (15) et de la paroi latérale droite (16) sont respectivement équipés d'armatures de support quadrilatérales (20), et
dans laquelle ladite paroi latérale avant (13), la plaque supérieure de caisse (11) et la paroi latérale arrière (14) sont toutes reliées à la paroi latérale gauche (15) et à la paroi latérale droite (16) par une première fermeture à glissière (17) pour former une caisse pour animal domestique fermée,
**caractérisée en ce que**
la premier fermeture à glissière (17) comprend une bande de tissu A et une bande de tissu B en prise l'une avec l'autre, la bande de tissu B étant cousue à un bord latéral de la paroi latérale avant (13), de la plaque supérieure de caisse (11) et de la paroi latérale arrière (14) et après une rotation de 180 degrés par rapport à la paroi latérale avant (13), la bande de tissu B s'assemble avec la partie inférieure de la plaque supérieure de caisse (11).

2. Caisse pour animal domestique (1) selon la revendication 1, dans laquelle la paroi latérale avant (13) a en outre une porte (101), avec un rideau facultatif (104) au-dessus de la porte (104).

3. Caisse pour animal domestique (1) selon la revendication 1, dans laquelle l'une ou l'autre parmi la paroi latérale gauche (15) et la paroi latérale droite (16) a en outre une fenêtre (102).

4. Caisse pour animal domestique (1) selon la revendication 1, dans laquelle deux chambres de lestage (19) sont fabriquées sur la portion inférieure de la paroi latérale gauche (15) et de la paroi latérale droite (16).

5. Caisse pour animal domestique (1) selon la revendication 1, dans laquelle les parois latérales arrière (14) sont reliées à la plaque supérieure (11), la bande de tissu B étant assemblée à la paroi latérale arrière (14) après une rotation à 180 degrés par rapport à la plaque supérieure de caisse (11).

6. Caisse pour animal domestique (1) selon la revendication 1, dans laquelle la paroi latérale arrière (14) contient une seconde fermeture à glissière (18) qui permet de réaliser une ouverture en forme de U inversé et de l'ouvrir vers le bas pour être posée à plat sur une surface.

7. Caisse pour animal domestique (1) selon la revendication 1, dans laquelle la plaque de base (12) contient en outre un rembourrage (120) qui peut être plié dans une conception à deux couches ou déplié dans une conception à une seule couche pour une utilisation plus étendue.

8. Caisse pour animal domestique (1) selon la revendication 1, dans laquelle la plaque supérieure (11) contient une plaque d'abri supplémentaire attachée au dessus d'une plaque rigide, ladite plaque d'abri supplémentaire a une aire qui est plus grande que l'aire de la plaque rigide, et la plaque de toit est une plaque généralement rigide imperméable à l'eau.

9. Caisse pour animal domestique (1) selon la revendication 1, dans laquelle une pochette (131) avec un rabat de pochette facultatif (132) peut être ajoutée à la paroi latérale avant (13), à la paroi latérale gauche (15) ou à la paroi latérale droite (16).

10. Caisse pour animal domestique (1) selon la revendication 1, dans laquelle la paroi latérale gauche (15) et la paroi latérale droite (16) peuvent être fabriquées dans une forme pentagonale correspondante, et la plaque supérieure sera fabriquée dans une forme pliée pour correspondre à la forme pentagonale des deux parois latérales (15, 16).
